(19) Europäisches Patentamt
European Patent Office
Office européen des brevets

(11) **EP 1 250 956 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***B01L 3/02*** *(2006.01)*

(21) Anmeldenummer: **02007540.4**

(22) Anmeldetag: **03.04.2002**

(54) **Verfahren zum kontrollierten Dosieren von Flüssigkeiten unter Verdrängung eines Gaspolsters**

Method for dispensing liquids by displacement of a gas cushion

Procédé de dosage de liquides par déplacement d'un coussin de gaz

(84) Benannte Vertragsstaaten:
**AT BE CH CY DE DK ES FI FR GB GR IE IT LI LU MC NL PT SE TR**

(30) Priorität: **18.04.2001 DE 10118875**

(43) Veröffentlichungstag der Anmeldung:
**23.10.2002 Patentblatt 2002/43**

(73) Patentinhaber: **EPPENDORF AG**
**22339 Hamburg (DE)**

(72) Erfinder: **Salje, Gerhard, Dr.**
**22393 Hamburg (DE)**

(74) Vertreter: **Hauck Patent- und Rechtsanwälte**
**Postfach 11 31 53**
**20431 Hamburg (DE)**

(56) Entgegenhaltungen:
**EP-A- 0 682 258          DE-A- 3 531 241**
**US-A- 4 586 546          US-A- 5 024 109**
**US-A- 5 187 990          US-A- 5 481 900**
**US-A- 5 895 838**

**Beschreibung**

Die Erfindung bezieht sich auf ein Verfahren zum kontrollierten Dosieren von Flüssigkeiten mittels einer Verdrängungseinrichtung zum Verschieben eines Gaspolsters und einem damit verbundenen Aufnahmevolumen mit einer Öffnung zur Umgebung für die Aufnahme und Abgabe von Flüssigkeiten durch Verschieben des Gaspolsters mittels der Verdrängungseinrichtung.

Das Dosieren von Flüssigkeiten unter Verschiebung eines Gaspolsters wird mittels manuellen oder elektrischen Pipetten oder Dosierautomaten durchgeführt. In der Regel ist das Gaspolster ein Luftpolster. Die Verdrängungseinrichtung ist zumeist als Zylinder mit einem darin verschieblichen Kolben ausgebildet. Die Flüssigkeit wird meistens in eine Pipettenspitze aufgenommen, die austauschbar ist. Pipettenspitzen sind zumeist als Einmalartikel konzipiert, die nach einmaligem Gebrauch weggeworfen werden können. In der Regel sind sie aus Kunststoff. Das Einsaugen und Ausstoßen der Flüssigkeit mit Hilfe des Gaspolsters hat den Vorteil, daß Kontaminationen der Verdrängungseinrichtung und der übrigen wiederverwendeten Teile der Dosiereinrichtung vermieden werden. Einer allmählichen Kontamination durch Aerosole oder fehlerhafte Handhabung der Dosiereinrichtung kann durch Filter entgegengewirkt werden, die vorzugsweise in die Pipettenspitzen integriert sind.

Die bekannten elektrischen Luftpolsterpipetten und Dosierautomaten sind in bezug auf die Richtigkeit des abgegebenen Flüssigkeitsvolumens bzw. den Dosierfehler immer noch sehr anfällig. Selbst große Abweichungen vom Sollwert des abzugebenden Flüssigkeitsvolumens, welche durch eine Undichtigkeit des Dosiersystems verursacht werden, werden nicht erkannt. Dosierfehler können auch beim Dosieren von Flüssigkeiten mit hohem Dampfdruck entstehen. Abweichungen in der Temperatur, der Dichte, der Viskosität und der Oberflächenspannung der zu dosierenden Flüssigkeit können ebenfalls große Dosierfehler verursachen, welche nicht erkannt werden. Handhabungsfehler, wie z.B. Lufteinzug durch zu frühe Entnahme aus der Flüssigkeit während der Aufnahme oder ein zu kleines Vorlagevolumen, führen ebenfalls zu Dosierfehlern.

Aus der US 5 895 838 ist ein Verfahren zum Korrigieren eines temperaturabhängigen Dispensierfehlers beim Dispensieren von Flüssigkeiten bekannt, so wie beim Pipettieren, sowie eine Vorrichtung zum Dispensieren von Flüssigkeiten, so wie eine Pipette, die einen höheren Genauigkeitsgrad hat. Nach dem Verfahren wird das Dispensieren mittels zwei Kammern durchgeführt, die miteinander über einen Gasdurchgang verbunden sind. Die erste Kammer kommuniziert zusätzlich zu dem Gasdurchgang mit der zu dispensierenden Flüssigkeit und die zweite Kammer ist gasdicht mit Ausnahme des Gasdurchganges. Um Flüssigkeit in die Dispensiervorrichtung aufzunehmen, wird das Volumen der zweiten Kammer vergrößert, was zu einem Gaseintritt in diese aus der ersten Kammer führt und wiederum zu einem Einströmen der dispensierenden Flüssigkeit in die erste Kammer, bis ein Druckgleichgewicht zwischen den Kammern erreicht ist. Die Änderung der Temperatur des Gases, das von der ersten Kammer in die zweite Kammer strömt, wird gemessen und die Volumenänderung, die in der zweiten Kammer bewirkt wird, wird auf Grundlage der gemessenen Temperaturänderung korrigiert, so daß die gewünschte Menge Flüssigkeit in die erste Kammer aufgenommen wird. Für die Temperaturmessung ist ein Temperatursensor in die zweite Kammer in der Nähe des Gasdurchganges eingebaut und zusätzlich kann auch ein Sensor, der in der ersten Kammer angebracht ist, verwendet werden. Dieses Verfahren ist nur zur Korrektur temperaturbedingter Dosierfehler geeignet.

Aus der DE 35 31 241 A1 ist eine Vorrichtung zur gesteuerten Ausgabe von Flüssigkeiten mit einer Kanüle zur Aufnahme der Flüssigkeit und einem axial bewegbaren Druckgeber an einem Ende der Kanüle bekannt, wobei zwischen Kanüle Druckgeber insbesondere eine in ihrem Volumen gleichbleibende Verbindung angeordnet ist. Zwischen Druckgeber und Kanüle, insbesondere in der Verbindung, ist wenigstens ein Drucksensor angeordnet und es ist eine Regelverbindung zwischen dem Drucksensor und einer Antriebseinrichtung für den Druckgeber vorgesehen.

Davon ausgehend liegt der Erfindung die Aufgabe zugrunde, ein verbessertes Verfahren zum kontrollierten Dosieren von Flüssigkeiten mit Hilfe eines Gaspolsters zu schaffen.

Die Aufgabe wird durch ein Verfahren mit den Merkmalen des Anspruches 1 gelöst. Ferner wird sie durch ein Verfahren mit den Merkmalen des Anspruches 10 gelöst. Vorteilhafte Ausgestaltungen der Verfahren sind in den Unteransprüchen angegeben.

Ausgangspunkt der Erfindung ist, daß der Dosierfehler, der durch Fehlerquellen wie Abweichungen des Dampfdruckes, der Temperatur, der Dichte, der Viskosität und der Oberflächenspannung der zu dosierenden Flüssigkeit, Änderungen der Geometrie der Pipettenspitze, Undichtigkeiten des Systems und Handhabungsfehler verursacht wird, den Druck beeinflußt, der im Gaspolster beim Verschieben desselben herrscht. Die Erfindung bezieht eine Messung des Druckes in dem Gaspolster ein, um alle oben erwähnten Fehlerquellen zu erfassen.

Nach der ersten Lösung wird bei einem Verfahren zum kontrollierten Dosieren von Flüssigkeiten mittels einer Verdrängungseinrichtung zum Verschieben eines Gaspolsters und einem mit der Verdrängungseinrichtung verbundenen Aufnahmevolumen mit einer Öffnung zur Umgebung für die Aufnahme und Abgabe von Flüssigkeit durch Verschieben eines Gaspolsters mittels der Verdrängungseinrichtung

- der Druck $p_{ab}$ in dem Gaspolster im Zeitpunkt der vollständigen Abgabe eines Flüssigkeitsvolumens gemessen,

- die Abgabezeit $t_{ab}$ für die vollständige Abgabe des Flüssigkeitsvolumens gemessen,
- der Zeitbedarf $\Delta t$ zum Komprimieren des Gaspolsters durch die Verdrängungseinrichtung mit Hilfe des Druckes $p_{ab}$, des Totvolumens $V_o$ des Gaspolsters, einer Gaszustandsgleichung und dem von der Verdrängungseinrichtung geförderten Gasvolumenstroms $Q$ ermittelt,
- durch Abzug des Zeitbedarfs $\Delta t$ von der gemessenen Abgabezeit $t_{ab}$ eine korrigierte Abgabezeit $t_{oab}$ als Kontrollgröße für die Dosierung ermittelt und
- die Abweichung der korrigierten Abgabezeit $t_{oab}$ von einer Solleingabezeit $t_{Soll}$ ausgegeben und/oder gespeichert und/oder zur Regelung der Abgabe des Flüssigkeitsvolumens herangezogen.

Die Abgabezeit $t_{ab}$ ist die Zeit, die die Verdrängungseinrichtung vom Beginn bis zum Ende der Verdrängung des Gaspolsters und damit bis zum Zeitpunkt der vollständigen Abgabe des Flüssigkeitsvolumens benötigt. Das Totvolumen $V_o$ des Gaspolsters ist das Volumen, das das Gaspolster zu Beginn der Aufnahme von Flüssigkeit aufweist. Die Verdrängungseinrichtung bewirkt während der Abgabezeit $t_{ab}$ zugleich eine Verlagerung und ein Komprimieren des Gaspolsters. Der Verlagerung des Gaspolsters entspricht das abgegebene Flüssigkeitsvolumen. Die obigen Fehlerquellen beeinflussen die Abgabezeit und das Ausmaß des Komprimierens des Gaspolsters. Infolgedessen kann der Dosierfehler durch den Zeitbedarf $\Delta t$ zum Komprimieren des Gaspolsters charakterisiert werden. Die korrigierte Abgabezeit $t_{oab}$, die sich durch Verminderung der Abgabezeit $t_{ab}$ um den Zeitbedarf $\Delta t$ ergibt, ist damit eine geeignete Kontrollgröße für das Dosieren von Flüssigkeiten, die es ermöglicht, Dosierfehler aufzudecken. Hierzu kann die Abweichung der korrigierten Abgabezeit $t_{oab}$ von einer Sollabgabezeit $t_{soll}$ ausgegeben werden, beispielsweise indem die Größe der Abweichung angezeigt bzw. bei Überschreitung einer tolerierbaren Abweichung ein Warnhinweis (z.B. akustisch, optisch bzw. in einer anderen wahrnehmbaren Form) gegeben wird. Zusätzlich oder statt dessen kann die Abweichung gespeichert werden, beispielsweise um einen Nachweis für die Genauigkeit einer Dosierung führen zu können. Zusätzlich oder statt dessen kann die Abweichung zur Regelung der Abgabe eines Flüssigkeitsvolumens herangezogen werden, beispielsweise indem beim mehrfachen oder schrittweisen Abgeben desselben Flüssigkeitsvolumens von Abgabe zu Abgabe die Genauigkeit der Dosierung verbessert wird.

Der Volumenfehler (Volumenänderung) $\Delta V$ kann durch Multiplikation des Zeitbedarfs $\Delta t$ mit dem Gasvolumenstrom $Q$ ermittelt werden.

Der Beginn der Abgabezeit $t_{ab}$ kann vorteilhaft anhand von Steuersignalen einer Einrichtung zum Steuern eines Antriebsmotors der Verdrängungseinrichtung ermittelt werden. Das Ende der Abgabezeit $t_{ab}$ kann vorteilhaft durch Messung eines Druckabfalles in dem Gaspolster ermittelt werden, da im Zeitpunkt der vollständigen Abgabe des Flüssigkeitsvolumens ein signifikanter Druckabfall in dem Gaspolster eintritt. Dieser Druckabfall ist sowohl bei der Abgabe eines aufgenommenen Flüssigkeitsvolumens in einem einzigen Abgabeschritt ("Pipettieren") als auch bei der schrittweisen Abgabe des aufgenommenen Flüssigkeitsvolumens in mehreren konstanten oder variablen Teilschritten ("Dispensieren") nach jedem Teilschritt meßbar. Hierdurch wird eine einfache elektronische Messung der Abgabezeit ermöglicht.

Als Gaszustandsgleichung kann vorteilhaft die ideale Gasgleichung herangezogen werden. Mit dem Volumenstrom kombiniert, kann der Zeitbedarf $\Delta t$ für das Komprimieren des Gaspolsters wird dann unter Bezugnahme auf den Zustand bei Umgebungsdruck $p_o$ ermittelt werden zu

$$(1) \qquad \Delta t = (p_{ab} \times V_o)/((p_o + p_{ab}) \times Q).$$

Die korrigierte Abgabezeit

$$(2) \qquad t_{oab} = t_{ab} - (p_{ab} \times V_o)/((p_o + p_{ab}) \times Q)$$

ist dann auf den Umgebungsdruck $p_o$ korrigiert. Die Korrektur auf den Umgebungsdruck $p_o$ ist vorteilhaft, da dies den Einsatz eines Relativdrucksensors begünstigt, der den Druckunterschied zum Umgebungsdruck $p_o$ mißt.

Die korrigierte Abgabezeit $t_{oab}$ kann mit einer Sollabgabezeit $t_{soll}$ verglichen werden, die bei einer von Dosierfehlern freien Dosierung oder bei einer Dosierung mit tolerierbaren Dosierfehlern erreicht wird. Im Idealfall, in dem das Gaspolster nicht komprimiert wird, ist das von der Verdrängungseinrichtung verdrängte Volumen genau gleich dem abgegebenen Flüssigkeitsvolumen. Dementsprechend kann die Sollabgabezeit $t_{soll}$ als Quotient des Sollvolumens $V_{soll}$ der abzugebenden Flüssigkeit und des von der Verdrängungseinrichtung geförderten Gasvolumenstroms $Q$ berechnet werden.

Die Richtigkeit und Präzision einer Dosiereinrichtung kann durch Wägung abgegebener Flüssigkeitsvolumina überprüft werden. Die Ergebnisse dieser Messungen können zur Kalibrierung der Dosiereinrichtung herangezogen werden. Dies kann beispielsweise in der Form geschehen, daß die Sollabgabezeit als Produkt des Quotienten aus dem Sollvolumen $V_{soll}$ und dem Gasvolumenstrom Q mit einer Kalibrationskonstante $C_{cal}$ errechnet wird, wobei die Kalibrationskonstante $C_{cal}$ aufgrund einer Kalibration der Dosiereinrichtung ermittelt wird. Die Sollabgabezeit $t_{soll}$ wird dann berechnet zu:

$$(3)\ t_{soll} = C_{cal} \times V_{soll}/Q.$$

Der von der Verdrängungseinrichtung geförderte Gasvolumenstrom Q kann aufgrund der Wirkfläche $F_{kol}$ und der Geschwindigkeit $v_{kol}$ eines Verdrängungsorgans der Verdrängungseinrichtung ermittelt werden, beispielsweise eines Kolbens einer Kolben-Zylindereinheit:

$$(4)\ Q = F_{kol} \times v_{kol}.$$

Eine vorteilhafte Ausgestaltung des Verfahrens berücksichtigt, daß die Verdrängungsgeschwindigkeit der Verdrängungseinrichtung während der Abgabezeit nicht konstant ist, sondern einer Beschleunigung bis zu einer konstanten Endgeschwindigkeit unterliegen kann. Eine weitere vorteilhafte Ausgestaltung berücksichtigt, daß die Verdrängungseinrichtung ein Spiel aufweisen kann, das bei der Umkehr der Förderrichtung der Verdrängungseinrichtung auszugleichen ist. Dem trägt das Verfahren dadurch Rechnung, daß entweder von der korrigierten Abgabezeit $t_{oab}$ ein Zeitmehrbedarf $t_{be}$ für eine Beschleunigung auf eine konstante Endgeschwindigkeit und/oder ein Zeitmehrbedarf $t_s$ für ein bei der Verdrängung auszugleichendes Spiel der Verdrängungseinrichtung abgezogen oder ein solcher Zeitmehrbedarf $t_{be}$ und/oder $t_s$ zur Sollabgabezeit $t_{soll}$ addiert wird.

Die korrigierte Abgabezeit $t_{oab}$ kann während des Pipettiervorgangs in Realzeit ermittelt werden. Der Vergleich der korrigierten Abgabezeit $t_{oab}$ mit der Sollabgabezeit $t_{soll}$ ermöglicht eine sehr gute Kontrolle der Dosiergenauigkeit. Als Variable gehen in die Sollabgabezeit $t_{soll}$ insbesondere das Sollvolumen der abzugebenden Flüssigkeit $V_{soll}$ und die Verdrängungsgeschwindigkeit $v_{kol}$ der Verdrängungseinrichtung ein. Alle anderen Variablen, wie Geometrie der Pipettenspitze, Viskosität der Flüssigkeit etc. werden bei diesem Vergleich eliminiert.

Nach der zweiten Lösung wird bei einem Verfahren zum kontrollierten Dosieren von Flüssigkeiten mittels einer Verdrängungseinrichtung zum Verschieben eines Gaspolsters und einem mit der Verdrängungseinrichtung verbundenen Aufnahmevolumen mit einer Öffnung zur Umgebung für die Aufnahme und Abgabe von Flüssigkeit durch Verschieben des Gaspolsters mittels der Verdrängungseinrichtung

- der Druck p in dem Gaspolster beim Verschieben des Gaspolsters gemessen,
- die Volumenänderung $\Delta V$ des Gaspolsters mit Hilfe einer Gaszustandsgleichung aus dem im Gaspolster gemessenen Druck p ermittelt,
- das korrigierte abgegebene Flüssigkeitsvolumen $V_{flüss}$ errechnet durch Abziehen der Volumenänderung $\Delta V$ des Gaspolsters von dem von der Verdrängungseinrichtung im Zeitpunkt t der Messung des Druckes p verdrängten Gasvolumen $V_{gas}$ und
- die Verdrängungseinrichtung gestoppt, wenn das korrigierte abgegebene Flüssigkeitsvolumen $V_{flüss}$ einem Sollvolumen $V_{soll}$ entspricht, oder
- das korrigierte abgegebene Flüssigkeitsvolumen $V_{flüss\ ab}$ bei dem Druck $p_{ab}$ und der Zeit $t_{ab}$ im Zeitpunkt der vollständigen Abgabe eines Flüssigkeitsvolumens errechnet und mit einem Sollvolumen $V_{soll}$ verglichen und die Abweichung des korrigierten abgegebenen Flüssigkeitsvolumens $V_{flüss}$ von dem Sollvolumen $V_{soll}$ ausgegeben und/oder gespeichert und/oder zur Regelung der Abgabe des Flüssigkeitsvolumens herangezogen.

Bei diesem Verfahren wird mit Hilfe des gemessenen Druckes p die Volumenänderung $\Delta V$ des Gaspolsters errechnet und das von der Verdrängungseinrichtung verdrängte Gasvolumen $V_{gas}$ ermittelt und durch Abziehen der Volumenänderung $\Delta V$ von dem verdrängten Gasvolumen $V_{gas}$ das korrigierte abgegebene Flüssigkeitsvolumen $V_{flüss}$ errechnet. Dies kann entweder laufend oder wiederholt während der gesamten Flüssigkeitsabgabe geschehen und den Abbruch des Abgabevorganges auslösen, wenn das korrigierte abgegebene Flüssigkeitsvolumen $V_{flüss}$ einem Sollvolumen $V_{soll}$ entspricht. Es ist aber auch möglich, das korrigierte abgegebene Flüssigkeitsvolumen $V_{flüss\ ab}$ für den Druck $p_{ab}$ im Zeitpunkt der vollständigen Abgabe des Flüssigkeitsvolumens und dafür gemessene Zeit $t_{ab}$ zu ermitteln und dieses mit einem Sollvolumen $V_{soll}$ zu vergleichen. Die Abweichung des korrigierten abgegebenen Flüssigkeitsvolumens $V_{flüss\ ab}$ vom Sollvolumen $V_{soll}$ kann wiederum ausgegeben und/oder gespeichert und/oder zur Regelung der Abgabe des Flüssigkeitsvolumens herangezogen werden, wie dies oben für die Abweichung der korrigierten Abgabezeit $t_{oab}$ von der Sollabgabezeit $t_{soll}$ beschrieben ist.

Gemäß einer weiteren vorteilhaften Ausgestaltung des Verfahrens wird die Volumenänderung $\Delta V$ des Gaspolsters mit Hilfe des gemessenen Wertes des Drucks p im Gaspolster und der idealen Gasgleichung ermittelt zu

$$(5) \quad \Delta V = p \times V_o/(p_o + p)$$

Das von der Verdrängungseinrichtung im Zeitpunkt t der Messung des Druckes p verdrängte Gasvolumen $V_{gas}$ kann auf verschiedene Weisen ermittelt werden. So kann dies beispielsweise über eine Messung des Weges s erfolgen, der von einem Verdrängungsorgan der Verdrängungseinrichtung vom Beginn der Verdrängung bis zum Zeitpunkt t zurückgelegt worden ist und durch Multiplikation dieses Weges s mit der Wirkfläche $F_{kol}$ der Verdrängungseinrichtung, die insbesondere eine Kolbenfläche sein kann. Bei einer Verdrängungseinrichtung, die einen Schrittmotor aufweist, kann die "Wegmessung" auch durch Zählen der Anzahl n der Schritte erfolgen, wobei sich der Weg s durch Multiplikation der Schritte n mit der Schrittweite $\Delta s$ ergibt. Des weiteren kann das verdrängte Gasvolumen $V_{gas}$ aufgrund einer Messung der Zeit t vom Beginn der Verschiebung des Gaspolsters bis zur Messung des Druckes p ermittelt werden. Der Beginn dieser Zeit t kann wie bei der oben beschriebenen Messung der Abgabezeit vorteilhaft von Steuersignalen einer Einrichtung zum Steuern eines Antriebsmotors der Verdrängungseinrichtung ausgelöst werden. Falls mit hinreichender Genauigkeit davon ausgegangen werden kann, daß die Verdrängungseinrichtung einen konstanten Gasvolumenstrom Q liefert, kann das korrigierte abgegebene Flüssigkeitsvolumen $V_{flüss}$ errechnet werden zu:

$$(6) \quad V_{flüss} = t \times Q - \Delta V.$$

Gemäß Obigem kann der geförderte Gasvolumenstrom Q aufgrund der Wirkfläche $F_{kol}$ und der Geschwindigkeit $v_{kol}$ eines Verdrängungsorgans der Verdrängungseinrichtung ermittelt werden. Von der Zeit t kann gegebenenfalls ein Zeitmehrbedarf $t_{be}$ für eine Beschleunigung auf eine konstante Endgeschwindigkeit und/oder ein Zeitmehrdarf $t_s$ für ein bei der Verdrängung auszugleichendes Spiel der Verdrängungseinrichtung abgezogen werden.

Bei einer Ausgestaltung dieser geregelten Dosierung wird die Verdrängungseinrichtung so gestoppt, daß das Flüssigkeitsvolumen $V_{flüss}$ zuzüglich einer nach dem Stoppen nachströmenden Restmenge $V_{rest}$ Flüssigkeit dem Sollvolumen $V_{soll}$ der abzugebenden Flüssigkeit entspricht:

$$(7) \quad V_{soll} = V_{flüss} + V_{rest}$$

Für die Restmenge $V_{rest}$ können Erfahrungswerte herangezogen werden.

Die vorbeschriebenen Verfahren beziehen sich auf die Abgabe von Flüssigkeiten, die sich bereits in dem Aufnahmevolumen befinden. Gemäß einer Ausgestaltung des Verfahrens wird zuvor ein Flüssigkeitsvolumen aufgenommen, das möglichst genau dem abzugebenden Sollvolumen entspricht, das in einem Abgabeschritt abzugeben ist, bzw. möglichst genau der Summe der Sollvolumina, die in mehreren Schritten zu dispensieren sind. Dies kann beispielsweise dadurch sichergestellt werden, daß die Dosiereinrichtung nach einem der Verfahren ausgelegt ist, die in der EP 0 562 358 B1 als zum Stand der Technik gehörend oder als Gegenstand dieses Patents angegeben sind. Ferner kann dies aufgrund einer Messung des Druckes im Gaspolster bei der Aufnahme der Flüssigkeit geschehen. Dabei wird aufgrund des gemessenen Druckes mit Hilfe einer Gaszustandsgleichung die Vergrößerung des Volumens des Gaspolsters bezüglich des Totvolumens $V_o$ durch das Gewicht der eingesogenen Flüssigkeitssäule errechnet und unter Berücksichtigung der Geometrie des Aufnahmevolumens das tatsächlich aufgenommene Flüssigkeitsvolumen errechnet. Die Flüssigkeitsaufnahme kann geregelt werden, bis das gewünschte Flüssigkeitsvolumen ausgenommen ist.

Soweit die obigen Verfahren die Regelung der Abgabe des Flüssigkeitsvolumens vorsehen, ist es möglich, auf eine möglichst genaue Flüssigkeitsaufnahme zu verzichten. Vorzugsweise ist hier sicherzustellen, daß zumindest das abzugebende Sollvolumen bzw. die Summe der abzugebenden Sollvolumina aufgenommen wird.

Die oben beschriebenen Verfahren sind für den Einsatz in Dosiereinrichtungen mit motorisch angetriebenen Verdrängungseinrichtungen bestimmt, insbesondere für den Einsatz in elektrischen Pipetten oder Dosierautomaten.

Die Erfindung wird nachfolgend anhand von Zeichnungen, Diagrammen und Tabellen von Ausführungsbeispielen und damit erzielten Meßergebnissen näher erläutert. In den Zeichnungen zeigen:

Fig. 1      eine nach dem erfindungsgemäßen Verfahren arbeitende Dosiereinrichtung in grobschematischer Darstellung;

Fig. 2      Messung des Druckes im Gaspolster bei der Aufnahme von Flüssigkeit in einem Druck-Zeit-Diagramm;

Fig. 3      Messung des Druckes im Gaspolster bei der Abgabe von Flüssigkeit in einem Druck-Zeit-Diagramm.

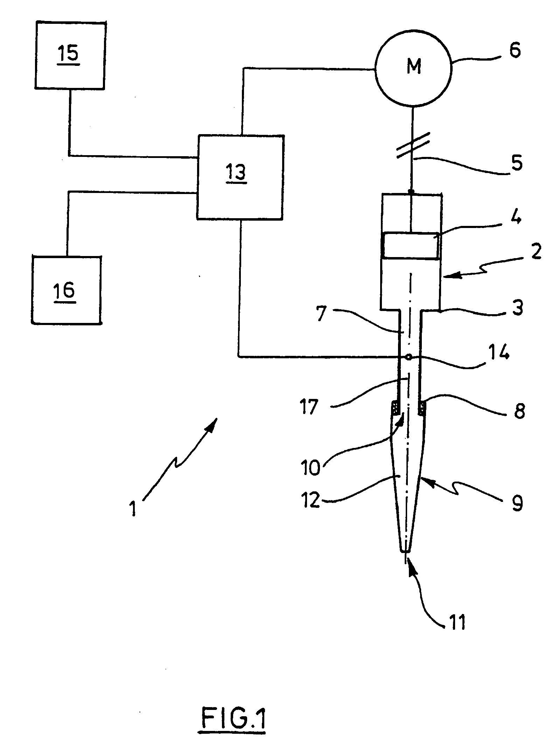

Gemäß Fig. 1 hat die Dosiereinrichtung 1 eine Verdrängungseinrichtung 2, die einen axial in einem Zylinder 3 verschieblichen Kolben 4 umfaßt. Der Kolben 4 ist über einen Spindelantrieb 5 mit einem elektrischen Antriebsmotor 6 gekoppelt.

Der Zylinder 3 ist über einen Verbindungskanal 7 mit einem Sitz 8 für eine Pipettenspitze 9 verbunden. Die Pipettenspitze 9 ist mit ihrer oberen Öffnung 10 lösbar auf dem Sitz 8 plaziert. Sie weist eine untere Öffnung 11 zur Aufnahme und Abgabe von Flüssigkeit auf. Zwischen der oberen und der unteren Öffnung 10, 11 hat sie ein Aufnahmevolumen 12, in dem sie Flüssigkeit aufnehmen kann.

Eine Steuer- und Auswerteelektronik 13 steuert den Betrieb des Antriebsmotors 6 und wertet Signale eines Drucksensors 14 aus, der im Verbindungskanal 7 angeordnet ist. Es können beispielsweise Drucksensoren der Modellreihe 40PC Series der Firma Honeywell Inc., 11 West Spring Street, Freeport, Illinois 61032 zum Einsatz kommen.

Die Steuer- und Auswerteelektronik 13 ist mit einer Eingabeeinrichtung 15 verbunden, z.B. mit einer Tastatur, und mit einer Ausgabeeinrichtung 16, z.B. einem Display bzw. einem akustischen Signalgeber.

Der Benutzer steuert die Arbeitsweise der Dosiereinrichtung durch Eingabe von Steuerbefehlen in die Eingabeeinrichtung 15. Mittels dieser kann er ein aufzunehmendes und abzugebendes Flüssigkeitsvolumen $V_{soll}$ auswählen. Die Aufnahme wird ausgelöst, wenn die Pipettenspitze 9 mit ihrer unteren Öffnung 11 in ein Flüssigkeitsreservoir eingetaucht ist. Der Kolben 4 wird dann mittels des Antriebsmotors 6 so bewegt, daß das Gaspolster, das sich zwischen der Kolbenunterseite und der unteren Öffnung 11 der Pipettenspitze 9 befindet, in das System hineinbewegt wird und Flüssigkeit in die Pipettenspitze 9 einsaugt. Mittels des Drucksensors 14 wird dabei der Druck im Gaspolster gemessen.

Für die Ausgabe des aufgenommenen Flüssigkeitsvolumens wird die Dosiereinheit mit der unteren Öffnung 11 der Pipettenspitze 9 über den Ort bewegt, auf dem das Flüssigkeitsvolumen abgegeben werden soll, beispielsweise über die Öffnung eines Reaktionsgefäßes. Durch Auslösen des Abgabevorgangs wird der Kolben 4 zurückbewegt, so daß das Gaspolster 17 das Flüssigkeitsvolumen aus der Pipettenspitze 9 ausschiebt. Dabei wird mittels des Drucksensors 14 der Druck im Gaspolster 17 gemessen.

Die Ausgabeeinrichtung 16 gibt außer dem Status der Dosiereinrichtung 1 (eingestelltes Flüssigkeitsvolumen, Aufnahme, Abgabe, Ruhezustand etc.) den Druck P im Gaspolster 17 an oder eine daraus abgeleitete Kontrollgröße oder gibt einen Warnhinweis, falls die aufgenommene bzw. abgegebene Flüssigkeitsmenge nicht der Vorgabe $V_{soll}$ entspricht.

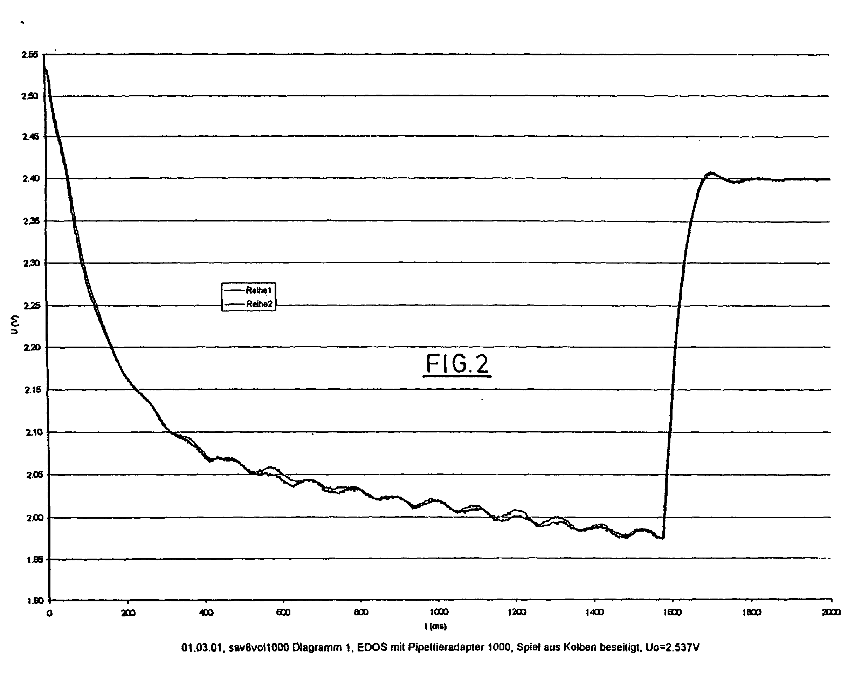

Die Fig. 2 zeigt die Druckverläufe bei der Aufnahme von Flüssigkeit. Dargestellt ist das vom Drucksensor gelieferte Spannungssignal U in Volt über der Zeit in ms für zwei Meßreihen.

Die dargestellten Druckkurven beziehen sich jeweils auf die Aufnahme von 1000 $\mu$l Wasser, wobei die Kolbengeschwindigkeit der Verdrängereinrichtung 10 mm pro Sekunde betrug. Die Dosiereinrichtung war ein Gerät vom Typ EDOS der Anmelderin mit einem Pipettieradapter 1000. Maßnahmen zur Reduzierung des Kolbenspieles wurden getroffen.

Der Drucksensor hat ein Grundsignal $U_0$ von 2,537 Volt. das bei Messung von Umgebungsdruck $p_0$ vorliegt. Davon ausgehend verlaufen die Druckkurven zu tieferen Spannungswerten entsprechend dem im Gaspolster erzeugten Unterdruck. Die Steigungen der Druckkurven nehmen allmählich ab bis zum Abschluß der Aufnahme, der durch einen steilen Anstieg der Druckkurven bis auf einen Wert von etwa 2,40 Volt gekennzeichnet ist. Der verbleibende Unterdruck basiert darauf, daß die Flüssigkeitssäule in der Pipettenspitze an dem Gaspolster "zieht", wodurch in dem Gaspolster ein Unterdruck entsteht.

Durch Vergleich der Druckkurven für die Aufnahme von Flüssigkeit mit Referenzkurven ist eine Kontrolle der Flüssigkeitsaufnahme möglich. Ein frühzeitiges Herausziehen der Pipettenspitze aus dem Flüssigkeitsreservoir aufgrund eines Handhabungsfehlers wäre durch einen vorzeitigen Anstieg der Druckkurve erkennbar. Auch kann mit Hilfe des Unterdruckes im Gaspolster nach Beendigung des Dosiervorganges die aufgenommene Flüssigkeitsmenge errechnet und kontrolliert werden, ob die Vorgabe erreicht wurde.

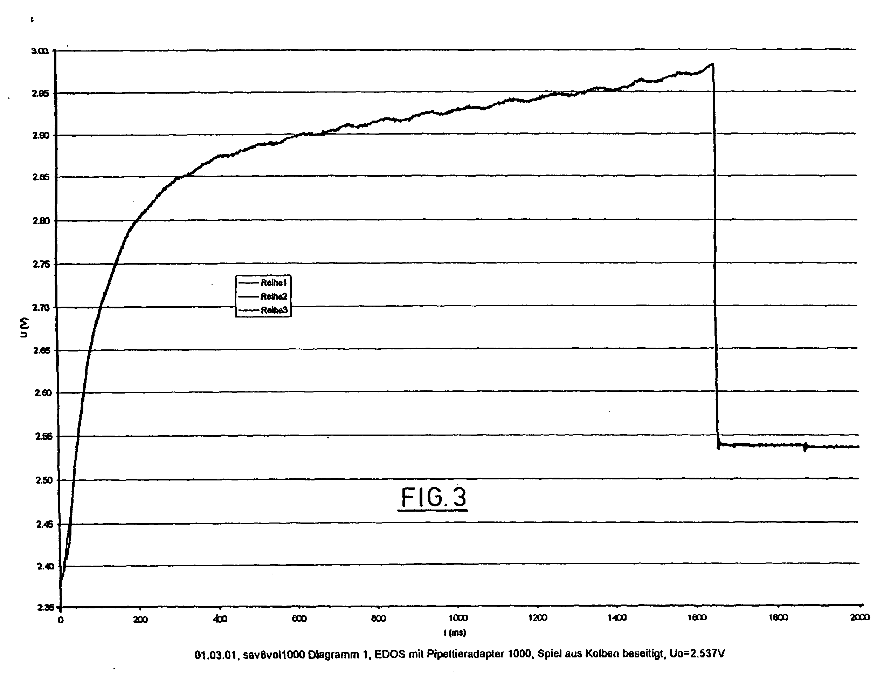

Die Fig. 3 zeigt die Druckkurve für die Abgabe der Flüssigkeit für drei Meßreihen, ebenfalls für die Abgabe von Volumina von 1000 $\mu$l und bei einer Kolbengeschwindigkeit von 10 mm pro Sekunde. Aufgetragen ist wiederum die vom Drucksensor gelieferte Spannung V in Volt über der Zeit in ms.

Die Druckkurven steigen etwa ausgehend vom Endwert für Flüssigkeitsaufnahme mit allmählich fallender Steigung zu Werten oberhalb des Grundsignales $V_0$, d.h. im Gaspolster herrscht ein Überdruck, der die Flüssigkeit aus der Pipettenspitze austreibt. Sobald die Flüssigkeit vollständig ausgetrieben ist, fällt die Druckkurve von einem Maximalwert von 2,984 Volt, der einem Abgabedruck von 14,95 hPa entspricht, steil auf das Grundsignal von 2,537 Volt, das dem Umgebungsdruck $P_0$ entspricht.

Die steile Flanke des Druckabfalls kann zur Triggerung einer Zeitmessung für die Abgabezeit $t_{ab}$ herangezogen werden.

Die nachfolgende Tabelle 1 gibt für einen bestimmten Versuchsaufbau Messungen der Abgabezeit $t_{ab}$ in Millisekunden und des Abgabedruckes $p_{ab}$ in hPa für die Teilvolumina 1000, 8000, 600, 400 und 200 μl und die Kolbengeschwindigkeit in 10, 8.5, 7, 6, 5, 4, 3.5, 3, 2 und 1 mm pro Sekunde an. Für den Versuchsaufbau wurde ein Meßplatz der Anmelderin verwendet, bestehend aus dem elektronischen Dosiersystem EDOS 5222 und dem Pipettieradapter 1000 und einem Personalcomputer mit einer Meßwerterfassungskarte. Zur Messung des Druckes im Gaspolster wurde ein Drucksensor der Firma Honeywell, 40PC001, am Pipettieradapter mit dem Gaspolster des Pipettieradapters verbunden. Grundsätzlich empfehlen sich kleine, temperaturkompensierte Drucksensoren mit hoher Meßempfindlichkeit und guter Linearität. Die Meßsignale des Drucksensors wurden über einen Analog/Digital-Wandler der Meßwerterfassungskarte in dem Computer gespeichert. Mit Start des Motors des Dosiersystems wurde die Druckwerterfassung gestartet. Aus den Druckkurven wurde der Abgabedruck $p_{ab}$ und die Abgabezeit $t_{ab}$ ermittelt.

Die in der Fig. 3 gezeigten Meßwerte für 1000 μl und 10 mm pro Sekunde Kolbengeschwindigkeit sind in der Tabelle enthalten.

Außer den Meßwerten aus den Druckkurven $t_{ab}$ und $p_{ab}$ sind in der Tabelle die errechneten korrigierten Abgabezeiten $t_{oab}$ und $t_{obs}$ angegeben.

Unterhalb der Tabelle sind nochmals die Formeln dargestellt, aus denen die korrigierte Abgabezeit $t_{oab}$ ermittelt wird, zu denen die ideale Gasgleichung und die Gleichung für das von der Verdrängungseinrichtung komprimierte Gasvolumen $\Delta V$ gehören. Außerdem ist unterhalb der Tabelle eine Legende für sämtliche verwendeten Größen angeführt.

Ferner befinden sich unterhalb der Tabelle nochmals die Formeln für die Ermittlung der Sollabgabezeit $t_{soll}$ unter Berücksichtigung einer Kalibrierungskonstante $C_{cal}$.

Des weiteren ist dort der Wert einer Kalibrierungskonstante angegeben, der sich aus durchgeführten Messungen ergibt.

Unter Bedingungen, die den Bedingungen bei der Kalibration entsprechen (Umgebungsdruck $p_o$, Totvolumen $V_o$...) sind die Ergebnisse für $t_{soll}$ als Vergleichsmaßstab für die Abgabezeit $t_{obs}$ heranzuziehen, die für neue Dosiervorgänge unter Berücksichtigung von Abgabedruck, Spiel und Beschleunigung der Verdrängungseinrichtung ermittelt werden. Falls die Abweichung einen bestimmten vorgegebenen Wert überschreitet, erfolgt eine Fehleranzeige.

## Zusammenfassung der Druckkurven vom 13.12.2000

| Vol.(µl) | 1000 | | | | 800 | | | | 600 | | | | 400 | | | | 200 | | | |
|---|---|---|---|---|---|---|---|---|---|---|---|---|---|---|---|---|---|---|---|---|
| | Messwerte | | Berücksicht. von: | | Messwerte | | Berücksicht. von: | | Messwerte | | Berücksicht. von: | | Messwerte | | Berücksicht. von: | | Messwerte | | Berücksicht. von: | |
| | | | Druck | Beschl.,Spiel | | | Druck | Beschl.,Spiel | | | Druck | Beschl.,Spiel | | | Druck | Beschl.,Spiel | | | Druck | Beschl.,Spiel |
| $v$(mm/s) $t_{ab}$(ms) | $P_{ab}$(hPa) | $t_{oab}$(ms) | $t_{obs}$(ms) | $t_{ab}$(ms) | $P_{ab}$(hPa) | $t_{oab}$(ms) | $t_{obs}$(ms) | $t_{ab}$(ms) | $P_{ab}$(hPa) | $t_{oab}$(ms) | $t_{obs}$(ms) | $t_{ab}$(ms) | $P_{ab}$(hPa) | $t_{oab}$(ms) | $t_{obs}$(ms) | $t_{ab}$(ms) | $P_{ab}$(hPa) | $t_{oab}$(ms) | $t_{obs}$(ms) |
| 9,451 | 1648 | 14,95 | 1585 | 1545,6 | 1340 | 14,88 | 1277 | 1237,6 | 1031 | 14,81 | 968 | 928,6 | 722 | 14,65 | 660 | 620,6 | 411 | 14,11 | 351 | 311,6 |
| 8,093 | 1893 | 11,13 | 1838 | 1799,1 | 1533 | 11,23 | 1477 | 1438,1 | 1173 | 11,13 | 1118 | 1079,1 | 813 | 11,16 | 758 | 719,1 | 450 | 10,90 | 396 | 357,1 |
| 6,734 | 2254 | 8,22 | 2205 | 2165,0 | 1822 | 8,36 | 1772 | 1732,0 | 1392 | 8,33 | 1342 | 1302,0 | 956 | 8,20 | 907 | 867,0 | 521 | 8,06 | 473 | 433,0 |
| 5,798 | 2604 | 6,83 | 2557 | 2514,9 | 2102 | 6,76 | 2055 | 2012,9 | 1595 | 6,86 | 1547 | 1504,9 | 1093 | 6,59 | 1047 | 1004,9 | 586 | 6,49 | 541 | 498,9 |
| 4,854 | 3092 | 5,53 | 3046 | 2999,5 | 2494 | 5,73 | 2446 | 2399,5 | 1893 | 5,75 | 1845 | 1798,5 | 1290 | 5,56 | 1244 | 1197,5 | 686 | 5,40 | 641 | 594,5 |
| 3,805 | 3936 | 4,66 | 3887 | 3831,7 | 3173 | 4,8 | 3122 | 3066,7 | 2412 | 5,16 | 2357 | 2301,7 | 1644 | 5,36 | 1587 | 1531,7 | 878 | 5,53 | 819 | 763,7 |
| 3,363 | 4465 | 5,03 | 4405 | 4343,8 | 3597 | 5,06 | 3537 | 3475,8 | 2731 | 5,06 | 2670 | 2608,8 | 1862 | 4,59 | 1807 | 1745,8 | 993 | 4,90 | 934 | 872,8 |
| 2,901 | 5164 | 4,16 | 5106 | 5036,4 | 4166 | 4,64 | 4101 | 4031,4 | 3161 | 4,66 | 3096 | 3026,4 | 2155 | 5,16 | 2083 | 2013,4 | 1146 | 4,66 | 1081 | 1011,4 |
| 1,953 | 7663 | 3,83 | 7584 | 7478,7 | 6173 | 4,26 | 6085 | 5979,7 | 4694 | 4,83 | 4594 | 4488,7 | 3201 | 5,00 | 3098 | 2992,7 | 1701 | 4,70 | 1604 | 1498,7 |
| 0,987 | 15215 | 5,68 | 14983 | 14779,7 | 12206 | 4,43 | 12025 | 11821,7 | 9267 | 4,77 | 9072 | 8868,7 | 6316 | 4,43 | 6135 | 5931,7 | 3328 | 4,57 | 3141 | 2937,7 |

$$P_o * V_o = (P_o + P_{ab}) * (V_o - \Delta V)$$

$$\Delta V = Q * \Delta t / 1000 = F_{kol} * v_{kol} * \Delta t / 1000$$

$$t_{oab} = t_{ab} - \Delta t = t_{ab} - (P_{ab} * V_o * 1000) / ((P_o + P_{ab}) * F_{kol} * v_{kol})$$

$$t_{obs} = t_{oab} - t_{be} - t_s$$

$$V_{ab} = (t_{oab} - t_{be} - t_s) * v_{kol} * F_{kol}$$

$$t_{soll} = (C_{cal} * 1000 / F_{kol}) * (V_{soll} / v_{kol})$$

Für die durchgeführten Messungen ergab sich:

$$t_{soll} = (1.01241 * 1000 / F_{kol}) * (V_{soll} / v_{kol})$$
$$t_{soll} = 14.58843 * (V_{soll} / v_{kol})$$

$P_o$ = Atmosphärendruck, 1013 hPa

$V_o$ = Totvolumen in µl (2850 µl)

$P_{ab}$ = gemessener relativer Abgabedruck in hPa

$\Delta V$ = relative Totvolumenänderung in µl

$Q$ = Volumenstrom in µl/s

$\Delta t$ = Zeit in ms zur Erzeugung der relativen Totvolumenänderung D V

$F_{kol}$ = Kolbenfläche in mm² (69.398 mm²)

$v_{kol}$ = Kolbengeschwindigkeit in mm/s

$t_{oab}$ = Abgabezeit, auf den Umgebungsdruck korrigiert, in ms

$t_{ab}$ = gemessene Abgabezeit in ms

$t_{obs}$ = Abgabezeit unter Berücksichtigung von Abgabedruck, Spiel und Beschleunigung

$t_{be}$ = Zeitmehrbedarf für Beschleunigungsrampe in ms

$t_s$ = Zeitbedarf für Spiel in ms, $s_u$ = Umkehrspiel in mm, $t_s = 1000 * s_u / v_{kol}$

$t_{soll}$ = Sollabgabezeit in ms

$C_{cal}$ = Kalibrationskonstante zur Korrektur von Schwankungen in Po, Vo, ...

$V_{soll}$ = Sollabgabevolumen in µl

$V_{ab}$ = Abgabevolumen in µl, aus Abgabezeit und Abgabedruck berechnet

EP 1 250 956 B1

**EP 1 250 956 B1**

**Patentansprüche**

**1.** Verfahren zum kontrollierten Dosieren von Flüssigkeiten mittels einer Verdrängungseinrichtung (2) zum Verschieben eines Gaspolsters (17) und einem mit der Verdrängungseinrichtung (2) verbundenen Aufnahmevolumen (12) mit einer Öffnung (11) zur Umgebung für die Aufnahme und Abgabe von Flüssigkeit durch Verschieben des Gaspolsters (17) mittels der Verdrängungseinrichtung (2), bei dem

- der Druck $p_{ab}$ in dem Gaspolster (17) im Zeitpunkt der vollständigen Abgabe eines Flüssigkeitsvolumens gemessen wird,
- die Abgabezeit $t_{ab}$ für die vollständige Abgabe des Flüssigkeitsvolumens gemessen wird, der Zeitbedarf $\Delta t$ zum Komprimieren des Gaspolsters (17) durch die Verdrängungseinrichtung mit Hilfe des Druckes $p_{ab}$, des Totvolumens $V_o$ des Gaspolsters (17), einer Gaszustandsgleichung und dem von der Verdrängungseinrichtung geförderten Gasvolumenstrom Q ermittelt wird,
- durch Abzug des Zeitbedarfs $\Delta t$ von der gemessenen Abgabezeit $t_{ab}$ eine korrigierte Abgabezeit $t_{oab}$ als Kontrollgröße für die Dosierung ermittelt wird und
- die Abweichung der korrigierten Abgabezeit $t_{oab}$ von einer Sollabgabezeit $t_{soll}$ ausgegeben und/oder gespeichert und/oder zur Regelung der Abgabe des Flüssigkeitsvolumens herangezogen wird.

**2.** Verfahren nach Anspruch 1, bei dem der Beginn der Abgabezeit $t_{ab}$ anhand von Steuersignalen einer Steuereinrichtung (13) für einen Antriebsmotor (6) der Verdrängungseinrichtung (2) ermittelt wird.

**3.** Verfahren nach Anspruch 1 oder 2, bei dem das Ende der Abgabezeit $t_{ab}$ durch Messung eines Druckabfalles in dem Gaspolster (17) im Zeitpunkt der vollständigen Abgabe des Flüssigkeitsvolumens ermittelt wird.

**4.** Verfahren nach einem der Ansprüche 1 bis 3, bei dem der Zeitbedarf $\Delta t$ für das Komprimieren des Gaspolsters ermittelt wird zu $\Delta t = (p_{ab} \times V_o)/((p_o + p_{ab}) \times Q)$, wobei $p_o$ der Umgebungsdruck bedeutet.

**5.** Verfahren nach einem der Ansprüche 1 bis 4, bei dem eine Sollabgabezeit $t_{soll}$ als Quotient des Sollvolumens $V_{soll}$ der abzugebenden Flüssigkeit und des von der Verdrängungseinrichtung geförderten Gasvolumenstroms Q berechnet wird.

**6.** Verfahren nach Anspruch 5, bei dem die Sollabgabezeit $t_{soll}$ durch Multiplikation des Quotienten $V_{soll}/Q$ mit einer Kalibrationskonstante $C_{cal}$ berechnet wird.

**7.** Verfahren nach einem der Ansprüche 1 bis 6, bei dem der von der Verdrängungseinrichtung geförderte Gasvolumenstrom Q mit Hilfe der Wirkfläche $F_{kol}$ und der Geschwindigkeit $v_{kol}$ eines Verdrängungsorgans der Verdrängungseinrichtung ermittelt wird zu $Q = F_{kol} \times v_{kol}$.

**8.** Verfahren nach einem der Ansprüche 1 bis 7, bei dem entweder von der korrigierten Abgabezeit $t_{oab}$ ein Zeitmehrbedarf $t_{be}$ für eine Beschleunigung auf eine konstante Endgeschwindigkeit und/oder ein Zeitmehrbedarf $t_s$ für ein bei der Verdrängung auszugleichendes Spiel der Verdrängungseinrichtung abgezogen oder ein solcher Zeitmehrbedarf $t_{be}$, $t_s$ zur Sollabgabezeit $t_{soll}$ addiert wird.

**9.** Verfahren nach Anspruch 8, bei dem eine Abhängigkeit des Zeitmehrbedarfs $t_{be}$ für die Beschleunigung von der Verdrängungsgeschwindigkeit $v_{kol}$ berücksichtigt wird.

**Claims**

**1.** A method for the controlled proportioning of liquids by means of a positive-displacement device (2) to dislocate a gas cushion (17) and a reception volume (12) connected to the positive-displacement device (2) which has an aperture (11) to the environment for receiving and discharging a liquid by dislocating the gas cushion (17) by means of the positive-displacement device (2) wherein

- the pressure $p_{ab}$ in the gas cushion (17) is measured at the time of a complete discharge of a liquid volume,
- the discharge time $t_{ab}$ for a complete discharge of the liquid volume is measured and the time demand $\Delta t$ to compress the gas cushion (17) by the positive-displacement device is determined by means of the pressure $p_{ab}$, the dead volume $V_o$ of the gas cushion (17), a gas condition equation, and the volumetric gas flow Q

**9**

discharged by the positive-displacement device,
- a corrected discharge time $t_{oab}$ is determined as a proportioning control magnitude by a deduction of the time demand $\Delta t$ from the discharge time $t_{ab}$ measured, and
- the deviation of the corrected discharge time $t_{oab}$ from a desired discharge time $t_{soll}$ is output and/or is saved and/or is resorted to for regulating the discharge of the liquid volume.

2. The method according to claim 1 wherein the beginning of the discharge time $t_{ab}$ is determined by way of control signals of a control device (13) for a driving motor (6) of the positive-displacement device (2).

3. The method according to claim 1 or 2 wherein the end of the discharge time $t_{ab}$ is determined by measuring a pressure drop in the gas cushion (17) at the time of a complete discharge of the liquid volume.

4. The method according to any one of claims 1 to 3 wherein the time demand $\Delta t$ to compress the gas cushion is determined as being $\Delta t = (p_{ab} \times V_o)/((p_o + p_{ab}) \times Q)$, wherein $p_o$ means the ambient pressure.

5. The method according to any one of claims 1 to 4 wherein a desired discharge time $t_{soll}$ is calculated as the quotient of the desired volume $V_{soll}$ of the liquid to be discharged and the volumetric gas flow Q discharged by the positive-displacement device.

6. The method according to claim 5 wherein the desired discharge time $t_{soll}$ is calculated by multiplying the quotient $V_{soll}/Q$ by a calibration constant $C_{cal}$.

7. The method according to any one of claims 1 to 6 wherein the volumetric gas flow Q discharged by the positive-displacement device is determined as being $Q = F_{kol} \times V_{kol}$ by means of the effective surface $F_{kol}$ and the speed $V_{kol}$ of a positive-displacement element of the positive-displacement device.

8. The method according to any one of claims 1 to 7 wherein either an additional time demand $t_{be}$ for an acceleration to a constant final speed and/or an additional time demand $t_s$ for a radial clearance of the positive-displacement device that requires balancing during the positive displacement is deducted from the corrected discharge time $t_{oab}$ or such an additional time demand $t_{be}$, $t_s$ is added to the desired discharge time $t_{soll}$.

9. The method according to claim 8 wherein a dependence of the additional time demand $t_{be}$ for an acceleration from the positive-displacement speed $v_{kol}$ is taken into account.

**Revendications**

1. Procédé de dosage contrôlé de liquides au moyen d'un dispositif de déplacement (2) destiné à déplacer un coussin de gaz (17), et d'un volume d'absorption (12) relié au dispositif de déplacement (2), avec une ouverture (11) vers l'environnement destinée à l'absorption et à la distribution de liquide par déplacement du coussin de gaz (17) au moyen du dispositif de déplacement (2), dans lequel

- est mesurée la pression $p_{dis}$ dans le coussin de gaz (17) au moment de la distribution complète d'un volume de liquide,
- est mesuré le temps de distribution $t_{dis}$ pour la distribution complète du volume de liquide, est déterminé le temps nécessaire $\Delta t$ pour comprimer le coussin de gaz (17) par le dispositif de déplacement à l'aide de la pression $p_{dis}$, du volume mort $V_o$ du coussin de gaz (17), d'une équation d'état du gaz et du débit volumique de gaz Q refoulé par le dispositif de déplacement,
- est déterminé par soustraction du temps nécessaire $\Delta t$ du temps de distribution $t_{dis}$ mesuré un temps de distribution corrigé $t_{odis}$ comme grandeur de contrôle pour le dosage et
- l'écart entre le temps de distribution corrigé $t_{odis}$ et un temps de distribution de consigne $t_{cons}$ est sorti et/ou mémorisé et/ou utilisé pour réguler la distribution du volume de liquide.

2. Procédé selon la revendication 1, dans lequel le début du temps de distribution $t_{dis}$ est déterminé à l'aide de signaux de commande d'un dispositif de commande (13) pour un moteur d'entraînement (6) du dispositif de déplacement (2).

3. Procédé selon la revendication 1 ou 2, dans lequel la fin du temps de distribution $t_{dis}$ est déterminée par la mesure d'une chute de pression dans le coussin de gaz (17) au moment de la distribution complète du volume de liquide.

4. Procédé selon l'une quelconque des revendications 1 à 3, dans lequel le temps nécessaire $\Delta t$ pour comprimer le coussin de gaz est déterminé avec $\Delta t = (p_{dis} \times V_o)/((p_o + p_{dis}) \times Q)$, $p_o$ correspondant à la pression ambiante.

5. Procédé selon l'une quelconque des revendications 1 à 4, dans lequel un temps de distribution de consigne $t_{cons}$ est calculé comme quotient du volume de consigne $V_{cons}$ du liquide à distribuer, et du débit volumique de gaz $Q$ refoulé par le dispositif de déplacement.

6. Procédé selon la revendication 5, dans lequel le temps de distribution de consigne $t_{cons}$ est calculé en multipliant le quotient $V_{cons}/Q$ par une constante de calibrage $C_{cal}$.

7. Procédé selon l'une quelconque des revendications 1 à 6, dans lequel le débit volumique de gaz $Q$ refoulé par le dispositif de déplacement est déterminé à l'aide de la surface d'action $F_{pis}$ et de la vitesse $V_{pis}$ d'un organe de déplacement du dispositif de déplacement, avec $Q = F_{pis} \times V_{pis}$.

8. Procédé selon l'une quelconque des revendications 1 à 7, dans lequel est soustrait du temps de distribution corrigé $t_{odis}$ un besoin supplémentaire de temps $t_{acc}$ pour une accélération à une vitesse finale constante et/ou un besoin supplémentaire de temps $t_j$ pour un jeu du dispositif de déplacement à compenser lors du déplacement ou un tel besoin supplémentaire de temps $t_{acc}$, $t_j$ est additionné au temps de distribution de consigne $t_{cons}$.

9. Procédé selon la revendication 8, dans lequel est pris en compte le fait que le besoin supplémentaire de temps $t_{acc}$ pour l'accélération dépend de la vitesse de déplacement $v_{pis}$.

**FIG.1**

FIG.2

01.03.01. sav8vol1000 Diagramm 1. EDOS mit Pipettieradapter 1000, Spiel aus Kolben beseitigt, Uo=2.537V

FIG. 3

01.03.01, sav8vol1000 Diagramm 1, EDOS mit Pipettieradapter 1000, Spiel aus Kolben beseitigt, Uo=2.537V

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5895838 A
- DE 3531241 A1
- EP 0562358 A